# EUROPÄISCHE PATENTSCHRIFT

(11) **EP 1 336 034 B1**
(45) Veröffentlichungstag und Bekanntmachung des Hinweises auf die Patenterteilung: **04.10.2006**
(21) Anmeldenummer: 01996674.6
(22) Anmeldetag: 17.11.2001
(51) Int. Cl.: F01N 3/28, B01J 35/08

(54) **VORRICHTUNG UND VERFAHREN ZUR NACHBEHANDLUNG VON VERBRENNUNGSKRAFTMASCHINENABGASEN**
METHOD AND DEVICE FOR AFTERTREATMENT OF EXHAUST GASES FROM COMBUSTION ENGINES
DISPOSITIF ET PROCEDE POUR RETRAITER DES GAZ D'ECHAPPEMENT DE MACHINES A COMBUSTION INTERNE

(30) Priorität: 18.11.2000 DE 10058580
(43) Veröffentlichungstag der Anmeldung: 20.08.2003
(73) Patentinhaber: Fraunhofer-Gesellschaft zur Förderung der angewandten Forschung e.V., 80686 München (DE); Hochschule für Technik und Wirtschaft Dresden (FH), 01069 Dresden (DE); Glatt Systemtechnik Dresden GmbH, 01277 Dresden (DE)
(72) Erfinder: STEPHANI, Günter, 01454 Grosserkmannsdorf (DE); ANDERSEN, Olaf, 01097 Dresden (DE); ZIKORIDSE, Gennadi, 01069 Dresden (DE); BACH, Ernstwendelin, 01239 Dresden (DE); BRETSCHNEIDER, Frank, 01465 Liegau-Augustusbad (DE)
(74) Vertreter: Pfenning, Meinig & Partner GbR
(86) Internationale Anmeldenummer: PCT/DE2001/004363
(87) Internationale Veröffentlichungsnummer: WO 2002/040837

(56) Entgegenhaltungen:
- EP-A- 0 142 722
- DE-A- 3 436 443
- DE-A- 4 234 436
- GB-A- 2 259 461
- US-A- 3 254 966
- US-A- 3 869 410
- US-A- 4 106 913

## Beschreibung

Die Erfindung betrifft eine Vorrichtung und ein Verfahren zur Nachbehandlung von Verbrennungskraftmaschinenabgasen und hier insbesondere zur Nachbehandlung von Abgasen von Verbrennungsmotoren.

Dabei besteht in verschiedenen alternativen Modifikationen die Möglichkeit, eine katalytischen Nachbehandlung und/oder eine Filterung von im Abgasstrom enthaltenen Partikeln allein oder in Kombination vorzunehmen.

Für die Abgasnachbehandlung von Abgasen aus Verbrennungskraftmaschinen sind verschiedene Möglichkeiten bekannt. Dabei werden zusätzliche Elemente, wie Katalysatoren oder Partikelfilter in einer Abgasleitung angeordnet und die zu behandelnden Abgase durch solche Elemente oder an diesen vorbei geführt, um Schadstoffkomponenten in unschädliche Bestandteile umzuwandeln und Partikel, insbesondere Ruß, der bei der Verbrennung in Dieselmotoren anfällt, zurückzuhalten.

Für die katalytische Nachbehandlung von Abgasen ist es bisher üblich, einen so genannten Katalysator in die Abgasleitung zu integrieren, wobei ein Gebilde verwendet wird, das von Hause aus eine relativ große Oberfläche, die durch eine an sich bekannte Beschichtung noch erhöht worden ist, mit katalytisch wirkenden Materialien, wie z.B. Platin, Rhodium und Palladium zu dotieren bzw. zu belegen.

Für die katalytische Wirkung ist jedoch eine Mindesttemperatur erforderlich, die bei den herkömmlichen Systemen bei bestimmten Betriebsregimes erreicht werden kann, da in der Startphase eines Verbrennungsmotors die erforderliche Temperaturerhöhung erst durch das austretende Abgas bewirkt wird. Durch die bisher erforderliche, die wirksame Oberfläche vergrößernde Beschichtung muss eine Überhitzung vermieden werden, da sich diese Schichten bei Überschreiten bestimmter Temperaturen auf- bzw. ablösen können und ein solcher Katalysator demzufolge nicht unmittelbar im Anschluß an den Abgasauslass eines Verbrennungsmotors angeordnet werden kann.

Für die Filterung von Partikeln und hier insbesondere Rußpartikeln aus den Abgasen von Verbrennungsmotoren sind die verschiedensten Filtersysteme bekannt, wobei sowohl metallische, wie auch Keramikmaterialien Einsatz finden. Durch die Ablagerung von Rußpartikeln in den bekannten Filtern ist es bisher erforderlich, in mehr oder weniger regelmäßigen Abständen eine so genannte Regeneration durchzuführen, um ein weitestgehendes Zusetzen der Filter und demzufolge auch eine Staudruckerhöhung zu vermeiden. Für eine solche Regeneration wird üblicherweise eine Verbrennung des im Filter separierten Rußes initiiert, wofür eine Energiezufuhr erforderlich ist, was selbstverständlich zu einer Wirkungsgradreduzierung führt, unabhängig davon, ob eine elektrische Beheizung oder die erforderliche Verbrennung unter Zufuhr von brennbaren Kohlenwasserstoffen eingeleitet wird.

Insbesondere durch die herkömmlichen Partikelfilter werden die Strömungsverhältnisse im Abgasstrom, je nach Beladungszustand des Filtermaterials beeinflusst, so dass in vielen Betriebszeiträumen nicht optimale Verbrennungsverhältnisse, abgasgegendruckbedingt eingehalten werden können.

Außerdem sind die herkömmlichen Systeme sowohl in der Herstellung, wie auch im Betrieb kostenintensiv. Daneben ist aus DE 34 36 443 A1 ein Kugelpaket-Abgaskatalysator bekannt.

In US 4,106,913 ist ein Abgaskatalysator mit Katalysatorträgern, die durch Sintern hergestellt werden sollen, beschrieben.

Die in GB 2 259 461 A beschriebene Lösung betrifft Abgaskatalysatoren mit Aluminiumoxidkugeln.

Aus EP 0 142 722 A2 ist der Einsatz einer Packung aus Kugel oder kugelähnlichen Körpern eines keramischen Materials für den Einsatz in Abgaskatalysatoren bekannt.

Die DE 42 34 436 A1 betrifft einen Nachrüstkatalysator mit einer Füllung von Keramikkugeln.

Aus JP 5843111 ist ein Partikelfilter für Dieselmotore bekannt, bei dem Abgas durch Metallfasern, daran anschließend durch eine katalytische Schicht und dann wieder durch Metallfasern geführt werden soll.

Es ist daher Aufgabe der Erfindung, eine Vorrichtung und ein Verfahren zur Abgasnachbehandlung vorzuschlagen, die einfach aufgebaut, kostengünstig sind sowie die Strömungsverhältnisse im Abgasstrom weniger nachteilig beeinflussen.

Erfindungsgemäß wird diese Aufgabe mit einer Vorrichtung gemäß Anspruch 1 und einem Verfahren, das die Merkmale des Anspruchs 15 aufweist, gelöst. Vorteilhafte Ausgestaltungsformen und Weiterbildungen der Erfindung können mit den in den untergeordneten Ansprüchen genannten Merkmalen erreicht werden.

Die erfindungsgemäße Vorrichtung zur Nachbehandlung von Verbrennungskraftmaschinenabgasen verwendet mindestens einen im Abgasstrom angeordneten Bereich, der mit Hohlkugeln ausgefüllt ist und das Abgas durch die Zwischenräume der Hohlkugeln strömt, wobei optimale Strömungsverhältnisse, durch die relativ gleichmäßige Strömungsführung eingehalten werden können. Diese Strömungsverhältnisse wirken sich besonders vorteilhaft für eine Partikelagglomeration aus und die gebildeten Agglomerate können dann in nachfolgend angeordneten Filterelementen günstiger aus dem Abgas separiert werden, wobei außerdem ein Schutz gegen Abgasdruckstöße für solche Filter/-elemente oder andere Elemente gegeben ist.

Die Strömungsbedingungen und Druckverhältnisse im Abgasstrang können für einen solchen mit Hohlkugeln gefüllten Bereich relativ einfach berechnet und bezüglich der jeweiligen Verbrennungskraftmaschine optimiert werden, so dass die Verbrennung durch ungünstige Staudruckverhältnisse im Abgasstrom nicht nachteilig beeinflusst wird.

Besonders vorteilhaft können Hohlkugeln eingesetzt werden, die zum einen eine erhebliche Massereduzierung sichern und zum anderen die Schallemission reduzieren können.

Außerdem kann relativ einfach eine bestimmte Porosität der Kugeloberflächen, aber auch der Kugelschalen eingestellt werden, wodurch die Oberflächen vergrößert und auch die strömungstechnischen Oberflächeneigenschaften positiv beeinflusst werden können, um die Abgasnachbehandlung effektiver zu gestalten.

Ein mit Kugeln bzw. Hohlkugeln gefüllter Bereich kann im Abgasstrang angeordnet werden, wobei die Kugeln beispielsweise mit metallischen Sieben, deren Maschenweite selbstverständlich kleiner als der kleinste Kugeldurchmesser sein soll, in Strömungsrichtung gesehen, gehalten werden, wobei eine nahezu beliebige Anordnung im Abgasstrang prinzipiell möglich ist, ein solcher Bereich jedoch in jedem Fall vor einem gegebenenfalls zu verwendenden Partikelfilter in Strömungsrichtung des Abgases angeordnet werden soll.

Ein mit Kugeln gefüllter Bereich kann aber vorteilhaft auch in unmittelbarer Nähe der Verbrennungskraftmaschine, an dessen Abgasauslässen, beispielsweise unmittelbar in einem Abgaskrümmer angeordnet sein, wobei auch mehrere solcher Bereiche in einzelnen Abgassträngen eines solchen Abgaskrümmers angeordnet sein können.

Die Kugeln sollten aus einem entsprechend thermisch stabilen Material bestehen, wobei bevorzugt Metalle, wegen der guten Wärmeleitfähigkeit eingesetzt werden können.

Die verwendeten Kugeln können als lose Schüttung im entsprechenden Bereich, diesen möglichst nahezu vollständig ausfüllend, vorliegen. Es besteht aber auch die Möglichkeit, einen punktuellen Sinterverbund benachbarter Kugeln, durch eine thermische Behandlung herzustellen.

In einem gemeinsamen Bereich können auch Kugeln unterschiedlicher Außendurchmesser eingesetzt werden. Günstiger erscheint es jedoch, mehrere kugelgefüllter Bereiche in einer Reihenanordnung einzusetzen, wobei in den einzelnen Bereichen Kugeln mit nahezu gleichem Außendurchmesser enthalten sind, deren Außendurchmesser sich in Strömungsrichtung des Abgases graduiert verkleinern oder vergrößern kann.

Die Kugeln bilden aber in allen Fällen ein selbsttragendes Gerüst, so dass neben dem gegebenenfalls vorgenommenen Sintern keine zusätzlichen stabilitäts- und festigkeitserhöhenden Maßnahmen erforderlich sind.

Der kugelgefüllte Bereich kann von einem Gehäuseelement, bis auf Öffnungen, durch die das Abgas ein- und austreten kann, umgeben sein, wobei die unterschiedlichsten Materialien mit ausreichender Festigkeit und thermischer Beständigkeit verwendet werden können. Wird beispielsweise ein Metallgehäuse verwendet, ist auch eine ausreichende Wärmeabführung gegeben, so dass in Verbindung mit Metallkugeln auch die guten Wärmeleiteigenschaften ausgenutzt werden kann.

Die verwendeten Kugeln bzw. Hohlkugeln können zumindestens an ihrer Oberfläche mit an sich bekannten katalytisch wirkenden Materialien dotiert bzw. beschichtet sein, so dass eine katalytische Nachbehandlung des Abgases möglich ist.

Durch die bereits erwähnte mögliche Anordnung eines kugelgefüllten Bereiches in unmittelbarer Nähe der Abgasauslässe einer Verbrennungskraftmaschine werden die für die katalytische Wirkung erforderlichen Temperaturen schneller erreicht, als dies bei herkömmlichen Systemen der Fall ist. Das Ansprechverhalten kann außerdem durch die relativ kleine Wärmekapazität, insbesondere bei der Verwendung von metallischen Hohlkugeln verbessert werden.

Das Gehäuse, in dem der kugelgefüllte Bereich angeordnet ist, sollte einen größeren freien Querschnitt aufweisen, als die in Strömungsrichtung vor- und nachgeordneten Abgasleitungsteile, um günstige Strömungsverhältnisse für das Abgas und eine relativ kleine Druckerhöhung vor dem kugelgefüllten Bereich zu sichern.

Die Kugeldurchmesser können im Bereich zwischen 1 und 10 mm ausgewählt werden, wobei Hohlkugelwandstärken zwischen 0,03 und 1 mm gewählt werden können. Die Porosität der Kugelstruktur kann zwischen 70 bis 97 % liegen.

Neben der gezielten Beeinflussung der Druckverhältnisse des Abgasstromes ist es vorteilhaft, dass die Abgasströmung im Anschluss an den kugelgefüllten Bereich weitestgehend laminar ist, was sich insbesondere für eine nachfolgende Einheit zur Partikelfiltration vorteilhaft auswirken kann.

So kann in Strömungsrichtung des Abgases nachfolgend ein weiteres katalytisch wirkendes Element, aber auch ein bereits erwähnter Partikelfilter angeordnet werden.

Ein besonders vorteilhafter Partikelfilter verwendet Metallfasern mit auswähl- bzw. einstellbarer Porosität und/oder Porengrößenverteilung, durch die das Abgas, insbesondere von Dieselmotoren zur Partikelfiltration/-separation geführt wird. Die Porengrößenverteilung kann im Bereich 1 bis 500 µm liegen.

Die bei der Durchführung durch den kugelgefüllten Bereich gebildeten Partikelagglomerate können mit einer solchen Metallfaserstruktur effizient zurückgehalten und ein nahezu vollständig partikelfreies Abgas kann an die Umwelt abgegeben werden.

Ein solcher mit Metallfasern gefüllter Bereich ist ebenfalls thermisch beständig, so dass auch hierfür eine Verbrennungskraftmaschinen nahe Anordnung möglich ist, und auch in diesem Bereich Abgastemperaturen auftreten, die ausreichen, um eine selbstätige Regeneration zu bewirken und eine zusätzliche Energiezufuhr zur Verbrennung von Rußpartikeln nicht erforderlich ist.

Ganz besonders vorteilhaft kann ein gradierter Aufbau für einen solchen Partikelfilter gewählt werden, d.h., es werden mehrere Teilbereiche in Strömungsrichtung des Abgases nacheinander angeordnet, die jeweils unterschiedliche Porositäten und/oder Porengrößenverteilung aufweisen, wobei die Porengröße des Filters möglichst kleiner wird. Dies ist durch eine entsprechende Metallfaserauswahl und/oder eine entsprechend dichte bzw. weniger dichte Packung von Metallfasern möglich.

Der mit Metallfasern gefüllte Bereich und auch die bereits erwähnten Teilbereiche eines gradierten Partikelfilters können ebenfalls von Metallsieben eingeschlossen und der übrige Teil von einem geschlossenen, bevorzugt aus einem Metall bestehenden Gehäuse umgeben sein. Die Querschnittsflächen des Austritts aus dem mit Kugeln befüllten und die des Eintritts in den mit Metallfasern befüllten Bereichen sollten gleich groß und gestaltet sein.

Die Metallfasern können eine versinterte stelbsttragende Struktur bilden.

Die Porosität der verwendeten Metallfaserstrukturen kann ebenfalls im Bereich zwischen 70 bis 95 % gewählt bzw. eingestellt werden und es können Metallfaserdurchmesser im Bereich zwischen 0,005 und 0,25 mm eingesetzt werden.

Sowohl die Metallfasern, wie auch die Kugeln bzw.

Hohlkugeln können vorteilhaft aus Chrom-Nickelstählen, Nickel-Basislegierungen, Eisen-Chrom-Aluminiumlegierungen und Aluminiden bestehen. Selbstverständlich können auch andere Metalle bzw. Legierungen eingesetzt werden.

Auch die Metallfasern können, wie dies bereits bei den Kugeln oder Hohlkugeln erwähnt worden ist, mit katalytisch wirkenden Materialien dotiert bzw. beschichtet sein, so dass nicht nur eine Partikelseparation, sondern auch eine katalytische Abgasnachbehandlung erreicht werden kann.

Auch die Metallfasern enthaltenden Bereiche weisen eine relativ geringe Masse auf und bilden eine selbsttragende Struktur. Durch die mögliche hohe Porosität kann eine entsprechend hohe Abscheiderate erreicht werden.

Außerdem wird zusätzlich die Schallemission reduziert und durch die gute Wärmeleitfähigkeit der Metallfasern in Verbindung mit der geringen Wärmekapazität ist ein ebenfalls gutes Ansprechverhalten sowohl bei einer katalytischen Nachbehandlung, wie auch bei der selbsttätigen Rückreinigung (Regeneration) gegeben.

Die explizit genannten Materialien sind nicht nur ausreichend fest, stabil, thermisch beständig, sondern auch in hohem Maße korrosionsbeständig, so dass eine hohe Lebensdauer gewährleistet werden kann.

Eine redundante parallele Anordnung, wie sie bei einigen bekannten Partikelfiltersystemen bisher verwendet wird, ist nicht erforderlich, da keine Pausen, die für eine bisher übliche Regeneration von Partikelfiltern mehr eingehalten werden müssen.

Sowohl die Hohlkugeln, wie auch die Metallfasern weisen von Haus aus eine entsprechend hohe Porosität auf, so dass eine zusätzliche Oberflächen vergrößernde Beschichtung nicht mehr erforderlich ist und die diesbezüglichen bereits erwähnten Nachteile behoben werden können.

Nachfolgend soll die Erfindung beispielhaft näher erläutert werden.

Dabei zeigen:
- Figur 1: in schematischer Form einen Aufbau eines Beispiels einer erfindungsgemäßen Vorrichtung;
- Figur 2: einen in mehrere Teilbereiche unterteilten Bereich zur Partikelseparation, die mit Metallfasern gefüllt sind.

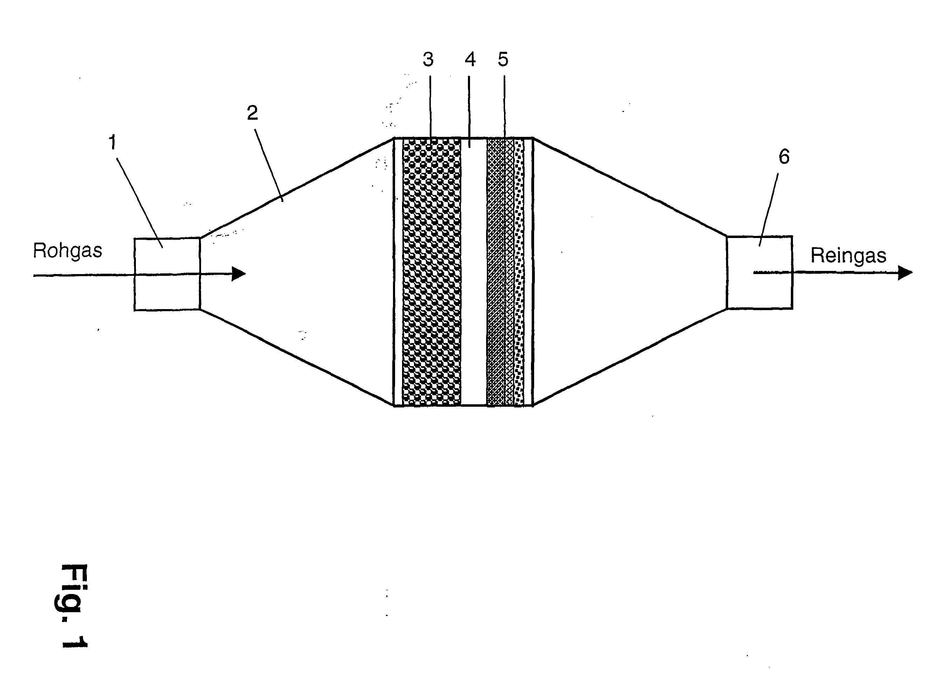

Bei dem in Figur 1 gezeigten Beispiel einer erfindungsgemäßen Vorrichtung zur Nachbehandlung von Verbrennungskraftmaschinenabgasen wird unbehandeltes und ungereinigtes Abgas durch einen Gaseintrittstutzen 1 in ein Metallgehäuse 2 geführt. Dabei vergrößert sich der freie Querschnitt des Gehäuses 2.

Im Gehäuse 2 ist ein mit Metallhohlkugeln, aus einem Nickel-Chromstahl gefüllter Bereich 3 ausgebildet. Die Metallhohlkugeln werden innerhalb des Gehäuses 2 mit Metallsieben, relativ großer Maschenweite, die jedoch kleiner als die des kleinsten Kugeldurchmessers ist, gehalten und können als lose Schüttung, aber auch in versinterter Form als selbsttragende Struktur ausgebildet sein.

Das durch den mit Hohlkugeln gefüllten Bereich 3 geführte Abgas kann katalytisch nachbehandelt werden, wenn die Hohlkugeloberflächen mit einem geeigneten katalytisch wirkenden Material dotiert bzw. beschichtet sind.

In jedem Fall wird die Abgasströmung jedoch so beeinflusst, dass gegebenenfalls enthaltene Partikel agglomeriert und die gebildeten Agglomerate in der in Strömungsrichtung des Abgases nachfolgend mit Metallfasern befüllten Bereich 5 aus dem Abgasstrom separiert und zurückgehalten werden, so dass weitestgehend schadstoff- und partikelfreies Abgas aus dem Austrittstutzen 6 abgeführt werden kann.

Bei dem in Figur 1 gezeigten Beispiel einer erfindungsgemäßen Vorrichtung ist zwischen dem mit Hohlkugeln gefüllten Bereich 3 und dem mit Metallfasern befüllten Bereich 5 ein Hohlraum 4 ausgebildet, durch den die weitestgehend laminare Abgasströmung in den mit Metallfasern gefüllten Bereich 5 eintreten kann.

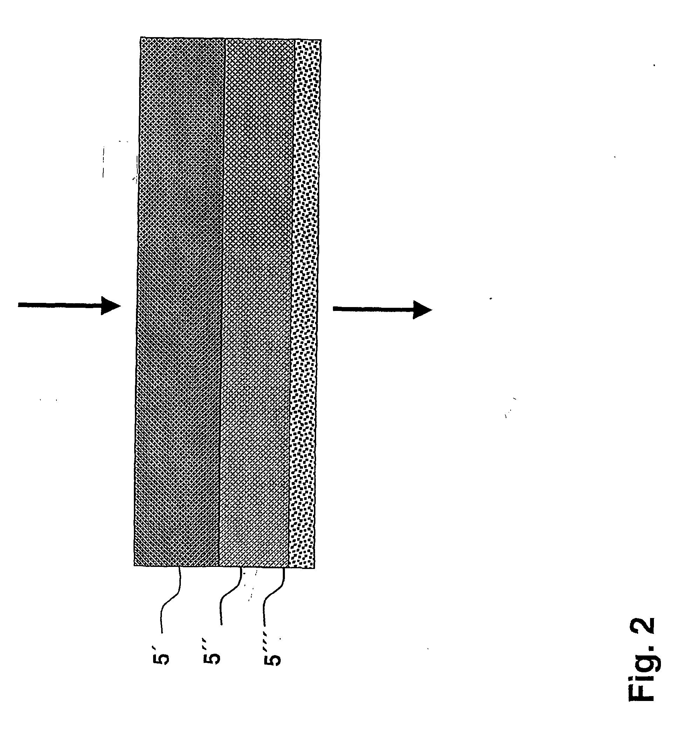

Bei dem hier gezeigten Beispiel wird ein gradierter Aufbau eines mit Metallfasern befüllten Bereiches 5 verwendet, wobei, wie dies deutlicher der Figur 2 entnommen werden kann, eine dreifache Abstufung gewählt worden ist.

So tritt das gegebenenfalls Partikel enthaltende Abgas aus dem mit Hohlkugeln befüllten Bereich 3 in einen Teilbereich 5' als Grobfilter ein. Die Metallfasern sind in diesem Teilbereich 5' so gewählt, dass eine Porosität von 90 bis 95 %, sowie eine Porengröße von 100 bis 200 µm vorliegt.

Anschließend ist mittig ein zweiter Teilbereich 5'', der vom ersten Teilbereich 5' in geeigneter Form, abgasdurchlässig abgetrennt ist, angeordnet. Dieser Teilbereich 5'' weist eine Porosität im Bereich zwischen 80 und 90 % mit einer Porengröße zwischen 50 bis 100 µm auf und sichert eine feinere Separation kleinerer Partikel.

In Richtung des Gasaustrittes 6 schließt sich ein dritter Teilbereich 5''', ebenfalls mit Metallfasern gefüllt, an, dessen Porosität zwischen 60 bis 70 % und die Porengröße < 50 µm eingestellt worden ist, so dass hier eine sehr feine Filterung erfolgt.

Selbstverständlich kann auch eine feinere Graduierung mit mehr als den drei gezeigten Teilbereichen 5', 5'', 5''' gewählt werden können.

In allen, aber auch in lediglich einem oder zwei Teilbereichen 5', 5'' oder 5''' können katalytisch dotiert bzw. beschichtete Metallfasern eingesetzt werden, um eine zusätzliche katalytische Nachbehandlung vorzunehmen.

Die erfindungsgemäße Vorrichtung kann relativ variabel ausgebildet sein und beispielsweise der mit Hohlkugeln gefüllte Bereich 3 lediglich zur Beeinflussung der Abgasströmung und/oder der für die Separation günstigen Partikelagglomeration genutzt werden und die katalytische Nachbehandlung kann eine optionale Möglichkeit sein.

Ähnlich verhält es sich auch mit den mit Metallfasern gefüllten Bereichen 5, die allein für die Partikelseparation aus dem Abgasstrom benutzt werden können, aber auch eine katalytische Nachbehandlung optional gegeben sein kann.

Auch für das Gehäuse 2 kann das gleiche Material, das auch für die Hohlkugeln und Metallfasern verwendet worden ist, eingesetzt werden, so dass keine elektrochemischen Potentialdifferenzen zu verzeichnen und auch die im allgemeinen Teil der Beschreibung erwähnten Eigenschaften vorhanden sind.

## Patentansprüche

1. Vorrichtung zur Nachbehandlung von Verbrennungskraftmaschinenabgasen, bei der
der Abgasstrom durch einen mit Hohlkugeln gefüllten Bereich (3) und nachfolgend durch einen mit Metallfasern gefüllten Bereich (5), als Partikelfilter, geführt ist.

2. Vorrichtung nach Anspruch 1,
**dadurch gekennzeichnet, dass** die Hohlkugeln aus einem Metall bestehen.

3. Vorrichtung nach einem der Ansprüche 1 oder 2,
**dadurch gekennzeichnet, dass** die Hohlkugeln porös sind.

4. Vorrichtung nach einem der Ansprüche 1 bis 3,
**dadurch gekennzeichnet, dass** sich die Kugeldurchmesser in Strömungsrichtung des Abgases verkleinern.

5. Vorrichtung nach einem der Ansprüche 1 bis 4,
**dadurch gekennzeichnet, dass** die Hohlkugeln punktuell miteinander versintert sind.

6. Vorrichtung nach einem der Ansprüche 1 bis 5,
**dadurch gekennzeichnet, dass** der mit Metallfasern gefüllte Bereich (5) in mindestens zwei schichtförmige Teilbereiche mit unterschiedlicher Porosität und/oder Porengrößenverteilung in Strömungsrichtung des Abgasstromes unterteilt ist.

7. Vorrichtung nach einem der Ansprüche 1 bis 6,
**dadurch gekennzeichnet, dass** die Porosität in Strömungsrichtung des Abgases verkleinert ist.

8. Vorrichtung nach einem der Ansprüche 1 bis 7,
**dadurch gekennzeichnet, dass** Porositäten im Bereich zwischen 70 und 95 % eingehalten sind.

9. Vorrichtung nach einem der Ansprüche 1 bis 8,
**dadurch gekennzeichnet, dass** die Oberfläche der Hohlkugeln und/oder Metallfasern mit katalytisch wirkendem Material dotiert oder beschichtet ist.

10. Vorrichtung nach einem der Ansprüche 1 bis 9,
**dadurch gekennzeichnet, dass** der mit Hohlkugeln befüllte Bereich (3) nah am Abgasaustritt einer Verbrennungskraftmaschine angeordnet ist.

11. Vorrichtung nach einem der Ansprüche 1 bis 10,
**dadurch gekennzeichnet, dass** der mit Hohlkugeln befüllte Bereich (3) im Abgaskrümmer einer Verbrennungskraftmaschine angeordnet ist.

12. Vorrichtung nach einem der Ansprüche 1 bis 11,
**dadurch gekennzeichnet, dass** zwischen dem mit Hohlkugeln gefüllten Bereich (3) und dem mit Metallfasern gefüllten Bereich (5) ein Hohlraum (4) vorhanden ist.

13. Vorrichtung nach einem der Ansprüche 1 bis 12,
**dadurch gekennzeichnet, dass** der freie Querschnitt, durch den das Abgas durch die Bereiche (3, 4, 5) geführt ist, gegenüber der Abgasleitung vergrößert ist.

14. Vorrichtung nach einem der Ansprüche 1 bis 13,
**dadurch gekennzeichnet, dass** die Hohlkugeln und Metallfasern aus einer Eisen-Chrom-Nickellegierung, Nickel-Basislegierung, einer Eisen-Chrom-Auluminiumlegierung oder Aluminid oder einer Kombination davon, gebildet sind.

15. Verfahren zur Nachbehandlung von Verbrennungskraftmaschinenabgasen,
beim dem Abgas durch einen mit Hohlkugeln befüllten Bereich (3) zur Beeinflussung der Abgasströmung, der Partikelagglomeration und/oder der katalytischen Nachbehandlung des Abgases und das Abgas im Anschluß an den mit Hohlkugeln befüllten Bereich (3) durch einen mit Metallfasern gefüllten Bereich (5) zur Filterung von Partikeln aus dem Abgas und/oder zur katalytischen Abgasnachbehandlung geführt wird.

16. Verfahren nach Anspruch 15,
**dadurch gekennzeichnet, dass** bei der Durchführung durch den mit Hohlkugeln befüllten Bereich (3) agglomerierte Partikel im mit Metallfasern gefüllten Bereich (4) aus dem Abgasstrom separiert werden.

17. Verfahren nach einem der Ansprüche 15 oder 16,
**dadurch gekennzeichnet, das** Partikel im mit Metallfasern befüllten Bereich (5), der in Teilbereiche (5', 5'', 5''') unterschiedlicher Porosität unterteilt ist, graduiert ausgefiltert werden.

## Claims

1. Device for the aftertreatment of internal combustion engine exhaust gases, in which the exhaust-gas stream is routed through a region (3) filled with hollow spheres and thereafter through a region (5) filled with metal fibres, as a particle filter.

2. Device according to Claim 1, **characterized in that** the hollow spheres consist of a metal.

3. Device according to either one of Claims 1 and 2, **characterized in that** the hollow spheres are porous.

4. Device according to one of Claims 1 to 3, **characterized in that** the sphere diameters decrease in the direction of flow of the exhaust gas.

5. Device according to one of Claims 1 to 4, **characterized in that** the hollow spheres are sintered together with one another in a punctiform manner.

6. Device according to one of Claims 1 to 5, **characterized in that** the region (5) filled with metal fibres is subdivided into at least two layer-shaped subregions with a different porosity and/or pore-size distribution in the direction of flow of the exhaust-gas stream.

7. Device according to one of Claims 1 to 6, **characterized in that** the porosity decreases in the direction of flow of the exhaust gas.

8. Device according to one of Claims 1 to 7, **characterized in that** porosities in the range of between 70 and 95% are maintained.

9. Device according to one of Claims 1 to 8, **characterized in that** the surface of the hollow spheres and/or metal fibres is doped or coated with catalytically acting material.

10. Device according to one of Claims 1 to 9, **characterized in that** the region (3) filled with hollow spheres is arranged near the exhaust-gas outlet of an internal combustion engine.

11. Device according to one of Claims 1 to 10, **characterized in that** the region (3) filled with hollow spheres is arranged in the exhaust manifold of an internal combustion engine.

12. Device according to one of Claims 1 to 11, **characterized in that** a cavity (4) is present between the region (3) filled with hollow spheres and the region (5) filled with metal fibres.

13. Device according to one of Claims 1 to 12, **characterized in that** the free cross section via which the exhaust gas is routed through the regions (3, 4, 5) is enlarged in comparison with the exhaust-gas line.

14. Device according to one of Claims 1 to 13, **characterized in that** the hollow spheres and metal fibres are formed from an iron-chromium-nickel alloy, nickel-based alloy, iron-chromium-aluminium alloy or aluminide or a combination thereof.

15. Method for the aftertreatment of internal combustion engine exhaust gases, in which exhaust gas is routed through a region (3) filled with hollow spheres, for influencing the exhaust-gas flow, the particle agglomeration and/or the catalytic aftertreatment of the exhaust gas, and, after the region (3) filled with hollow spheres, the exhaust gas is routed through a region (5) filled with metal fibres, for the filtration of particles out of the exhaust gas and/or for catalytic exhaust-gas aftertreatment.

16. Method according to Claim 15, **characterized in that**, during routing through the region (3) filled with hollow spheres, agglomerated particles are separated out of the exhaust-gas stream in the region (5) filled with metal fibres.

17. Method according to either one of Claims 15 and 16, **characterized in that**, in the region (5) filled with metal fibres, which is subdivided into subregions (5', 5'', 5''') of different porosity, particles are filtered out in a graduated manner.

## Revendications

1. Dispositif pour retraiter des gaz d'échappement de machines à combustion interne, dans lequel le flux de gaz d'échappement est guidé à travers une zone (3) remplie de sphères creuses, puis à travers une zone (5) remplie de fibres métalliques, comme filtres de particules.

2. Dispositif selon la revendication 1, **caractérisé en ce que** les sphères creuses sont constituées d'un métal.

3. Dispositif selon l'une quelconque des revendications 1 ou 2, **caractérisé en ce que** les sphères creuses sont poreuses.

4. Dispositif selon l'une quelconque des revendications 1 à 3, **caractérisé en ce que** les diamètres des sphères se réduisent dans le sens d'écoulement des gaz d'échappement.

5. Dispositif selon l'une quelconque des revendications 1 à 4, **caractérisé en ce que** les sphères creuses sont frittées ponctuellement l'une avec l'autre.

6. Dispositif selon l'une quelconque des revendications 1 à 5, **caractérisé en ce que** la zone (5) remplie de fibres métalliques est divisée en au moins deux zones partielles en forme de couche avec une porosité et/ou une répartition de tailles de pores différente(s) dans le sens d'écoulement du flux de gaz d'échappement.

7. Dispositif selon l'une quelconque des revendications 1 à 6, **caractérisé en ce que** la porosité est réduite dans le sens d'écoulement des gaz d'échappement.

8. Dispositif selon l'une quelconque des revendications 1 à 7, **caractérisé en ce que** l'on maintient des porosités dans la plage comprise entre 70 et 95%.

9. Dispositif selon l'une quelconque des revendications 1 à 8, **caractérisé en ce que** la surface des sphères creuses et/ou des fibres métalliques est dopée ou recouverte par un matériau à action catalytique.

10. Dispositif selon l'une quelconque des revendications 1 à 9, **caractérisé en ce que** l'on aménage la zone (3) remplie de sphères creuses près de la sortie des gaz d'échappement d'une machine à combustion interne.

11. Dispositif selon l'une quelconque des revendications 1 à 10, **caractérisé en ce que** l'on aménage la zone (3) remplie de sphères creuses dans le collecteur de gaz d'échappement d'une machine à combustion interne.

12. Dispositif selon l'une quelconque des revendications 1 à 11, **caractérisé en ce qu'**il y a un espace creux (4) entre la zone (3) remplie de sphères creuses et la zone (5) remplie de fibres métalliques.

13. Dispositif selon l'une quelconque des revendications 1 à 12, **caractérisé en ce que** la section transversale libre, par laquelle les gaz d'échappement sont guidés à travers les zones (3, 4, 5), est agrandie par rapport à la conduite de gaz d'échappement.

14. Dispositif selon l'une quelconque des revendications 1 à 13, **caractérisé en ce que** les sphères creuses et les fibres métalliques sont formées d'un alliage de fer-chrome-nickel, d'un alliage à base de nickel, d'un alliage de fer-chrome-aluminium ou d'un aluminure ou d'une de leurs combinaisons.

15. Procédé pour retraiter des gaz d'échappement de machines à combustion interne, dans lequel les gaz d'échappement sont guidés à travers une zone (3) remplie de sphères creuses pour agir sur le flux de gaz d'échappement, sur l'agglomération des particules et/ou sur le retraitement catalytique des gaz d'échappement et les gaz d'échappement sont guidés, à la suite de la zone (3) remplie de sphères creuses, à travers la zone (5) remplie de fibres métalliques pour la filtration de particules des gaz d'échappement et/ou pour le retraitement catalytique des gaz d'échappement.

16. Procédé selon la revendication 15, **caractérisé en ce que** les particules agglomérées lors de la traversée de la zone (3) remplie de sphères creuses sont séparées du flux de gaz d'échappement dans la zone (5) remplie de fibres métalliques.

17. Procédé selon l'une quelconque des revendications 15 ou 16, **caractérisé en ce que** l'on sépare par filtration graduellement les particules dans la zone (5) remplie de fibres métalliques, qui est divisée en zones partielles (5', 5'', 5''') de différentes porosités.
